# EUROPEAN PATENT APPLICATION

(11) **EP 2 366 928 A1**
(43) Date of publication of application: **21.09.2011**
(21) Application number: 10156629.7
(22) Date of filing: 16.03.2010
(51) Int. Cl.: F16L 7/00

(54) **A pipe arrangement, the use of the pipe arrangement and a method for manufacturing a pipe arrangement**

(71) Applicant: Powerpipe Systems AB, 425 02 Hisings Kärra (SE)
(72) Inventor: Govaert, Jacques, 471 60 Myggenäs (SE)
(74) Representative: Somlo, Tommy

(57) **Abstract**

The present invention relates to a pipe arrangement (1) for distribution of heating/cooling medium in a district heating/cooling system, which pipe arrangement comprises a first and a second pipe (5, 6) which are parallel and extend in a main direction inside an outer casing (2). At least one support member (10) is arranged inside the outer casing (2) and adapted to support the first and second pipes (5, 6), wherein the support member (10) cooperates with a locking member (20) to prevent a rotational movement of the support member (10). The present invention further relates to the use of such pipe arrangement, and to a method for manufacturing pipe arrangements.

## Description

### Field of the Invention

The present invention relates to pipes, or pipelines, for district heating/cooling systems, or industrial applications. In particular, the present invention relates to a pipe arrangement comprising a tubular waterproof outer casing, or a jacket pipe, and at least two parallel pipes for conveying medium in such systems or industrial applications. The invention further relates to the use of such pipe arrangements and to a method for manufacturing pipe arrangements.

### Background Art

In medium distributing systems, such as district heating and/or cooling systems, pipes are typically arranged for feeding and returning medium, such as hot/cold water or steam, to multiple sites or buildings. The heating or cooling medium may be provided from various sources such as power plants, cogeneration plants, from waste energy from industry, geothermal sources, etc.

In the distribution systems, pipe sections are often interconnected to form pipe connections, or pipelines, of suitable length between the intended sites, wherein the pipeline may be buried under ground or arranged in culverts. In order to provide the system with desired energy conserving properties, the pipes are typically formed of medium conveying pipes which are provided with a surrounding outer casing, or a jacket pipe, wherein an insulating material is arranged between the medium carrying pipe and outer casing.

WO 01/92776 A1 describes pipeline sections which are to be interconnected and which are suitable for district heating systems, wherein a medium holding pipe of a weldable material is arranged inside a jacket pipe of a plastics material. Also, insulation of an expanded material is provided between the medium holding pipe and the jacket pipe.

Normally, two feeding pipelines are provided, one feed pipeline and one return pipeline, by interconnecting a plurality of pipe sections at an intended site, such as in a dug-out trench which is to be filled once the pipe sections are interconnected and arranged in the trench.

It is further known to form pipe sections wherein two, or multiple, pipes for conveying medium are arranged in one outer casing. For example, this allows for arranging a feed and a return conduit in one pipe section, such that as a double pipe section or multiple pipe section is formed. Hence, it is not required to provide separate pipelines for feeding and return in a distribution system.

Double pipe sections or multiple pipe sections, however, are disadvantageous in that smaller irregularities related to the alignment of the pipes for conveying medium in relation to each other and/or in relation to the outer casing may occur. The irregularities in alignment may in turn lead to increased misalignment of the pipes for conveying medium in a pipeline comprising a number of interconnected double pipe sections, or multiple pipe sections.

### Summary of the Invention

It is an object of the present invention to provide an improved pipe arrangement comprising two, or more, pipes for conveying medium which at least alleviates the above-discussed drawbacks of the prior art. It is also an object of the present invention to provide a method for manufacturing such pipe arrangement.

This object is achieved with a pipe arrangement and method for manufacturing a pipe arrangement according to the appended claims.

The present invention is based on the insight that by preventing rotational movement of a pipe-supporting member will reduce or avoid misalignment of the medium conveying pipes.

According to a first aspect thereof, the present invention relates to a pipe arrangement for distribution of heating/cooling medium in a district heating/cooling system, which pipe arrangement comprises a tubular waterproof outer casing, a first and a second pipe adapted to convey heating/cooling medium, wherein the first and second pipes are parallel and extend in a main direction, and are arranged inside the outer casing. At least one support member is arranged inside the outer casing and adapted to support the first and second pipes in relation to the outer casing. Furthermore, the outer casing comprises a locking member, which locking member is arranged on an inner side of the outer casing, and the support member cooperates with the locking member to prevent a rotational movement of the support member in relation to the outer casing around an axis of rotation coinciding with, or parallel with, the main direction.

In other words, the pipe arrangement of the present invention forms a double pipe arrangement, or multi pipe arrangement, having two or more pipes for conveying medium, or medium pipes, which are supported and aligned with respect to the surrounding outer casing, or jacket pipe, in an improved manner. The medium pipes are thereby secured in a desired position in the main direction, wherein turning and bending of the medium pipes in relation to each other and in relation to the outer casing is prevented by engaging the support member with the locking member arranged on the inner side, or inner surface, of the outer casing. Also, the support member maintains the medium pipes in the desired position and irregularities related to the parallel alignment of the medium pipes in relation to each other and in the relation to the outer casing are reduced.

The invention also efficiently prevents distortion, such as torsional distortion, of the medium pipes in the pipe arrangement. In other words, the medium pipes are prevented from being subjected to rotation or twisting around a common center axis along the main direction of the pipe arrangement.

The invention further allows for a continuous and undivided protection for the medium pipes which are arranged inside the tubular and waterproof casing. Hence, the outer casing prevents penetration of water or moisture to the medium pipes. In particular, this is advantageous when arranging pipelines formed of the pipe arrangement according to the present invention in externally stressing and trying environments, such as underground or in other trying environments in which e.g. moisture or dynamic thermal conditions may lead to corrosion, damage and leakage.

For example, a double pipe section, or multiple pipe section, with two free ends may be formed according to the inventive pipe arrangement, wherein the medium pipes of the pipe section protrude a short distance away from the free ends of the outer casing, and wherein the tubular waterproof outer casing forms a continuous circumferentially enclosing casing which extends in the main direction between the free ends of the pipe section.

Furthermore, owing to the cooperation between the support member and the locking member of the outer casing, the present invention is advantageous in that the support member is secured against rotational movements which allow for the medium pipes of the pipe arrangement being maintained in an aligned and desired position during handling, storing, and use of the pipe arrangement. Also, distortion and damage of the pipe arrangement, in particular of the medium pipes, due to thermal variations may be efficiently mitigated, which allows for improved operation and duration of the pipe arrangement. Moreover, the manufacturing of pipe arrangement according to the invention, wherein the medium pipes are secured in the right position, is considerably facilitated. In particular, the pipe arrangement is advantageous in that a pre-fabricated double pipe section, or multiple pipe section, may be manufactured, wherein the parallel alignment of the medium pipes inside the outer casing can be realized. An number of pipe section may further be interconnected into a pipeline, wherein the medium pipes of each pipe sections are aligned which e.g. prevents a gradually rising misalignment, or twisting, of the medium pipes in relation to the complete pipeline.

The pipe arrangement of the present invention further provides a simple and cost-effective solution in terms of manufacturing and durability.

The outer casing may e.g. be circular and have an outer diameter between 50-1000 mm, such as between 100-700 mm, for example between 140-560 mm. The outer diameter of the medium pipes may be between 10-500 mm, such as between 20-300 mm, for example between 25-220 mm. Furthermore, the pipe arrangement may be formed of pipe sections having a total length e.g. between 0.5-50 m, such as between 5-30 m, for example between 10-25. For example, the pipe section may have a length of about 12 m, or about 16 m.

According to an exemplifying embodiment, the pipe arrangement further comprise a thermally insulating material arranged inside said outer casing, which insulating material surrounds said first and second pipes. The insulation material advantageously provides the pipe arrangement with suitable thermal and energy efficient properties, and further protects the medium pipes from thermal and other physical stress. The insulation material may for example comprise foam, or expanded foam, such as polyurethane formulations or low-density rigid foam, or any other material having suitable insulation and age resisting properties.

The insulation material may further assist in maintaining the medium pipes in a correct alignment when the pipe arrangement is completed after manufacturing. For example, the support member may also ensure correct positioning of the medium pipes when the insulating material is injected, expanded and solidified inside the outer casing.

According to an exemplifying embodiment, the support member of the pipe arrangement is enabled to move in relation to the outer casing along a direction coinciding with, or parallel with, said main direction. In other words, the support member is arranged to cooperate with the locking member while also being able to move in the main direction of the pipe arrangement, or along the general direction of a complete pipeline consisting of a number of interconnected pipe sections arranged according to at least one embodiment of the present invention. Advantageously, the smaller movements in the main direction of the support member and the medium pipes in relation to the outer casing is allowed while the support member and the first and second medium pipes are maintained in an aligned and non-rotated orientation in relation to the outer casing. For example, movements in the main direction may occur due to thermal expansion or retraction, or due to pressure dynamics related to the use of the pipe arrangement. Hence, because the support member of the pipe arrangement may move, or for example slide, in relation to the outer casing, an improved pipe arrangement which is less prone to suffer from damage or leakage due to thermal and external stresses is provided.

According to an exemplifying embodiment, the locking member is integrally formed in the outer casing. By forming the locking member integrally on the inner side of the outer casing, the cooperation between the support member and the locking member to orient the support member as desired with respect to the outer casing is e.g. efficiently facilitated with few parts. Also, a durable structure which is durable over long time and with few parts is realized. For example, the locking member may be provided on, or formed in, the inner surface of the outer casing during manufacturing. Also, the locking member may be formed directly during manufacturing of the outer casing, or in a subsequent step, which enables efficient manufacturing.

According to an exemplifying embodiment, the locking member of the outer casing is formed of a protruding portion, or a recess, extending in the main direction. This is advantageous in that the support member may cooperate with the protruding portion, or recess, such that the rotational movement of the support member is efficiently prevented. Moreover, the support member may be arranged anywhere along the pipe arrangement in the main direction wherein the protruding portion or recess is provided. For example, the locking member in the form of a protruding portion, or a recess, extends continuously along the longitudinal direction, or full length, of the outer casing of the pipe arrangement. This is further advantageous in that the support member may be arranged anywhere along the main direction of the pipe arrangement. Also, a number of support members may be provided to support the first and second pipes along the main direction.

For example, the locking member in the form of a protruding portion is arranged on the inner surface of the tubular outer casing and protrudes inwardly, for example in a direction towards a center point of the tubular outer casing. Furthermore, the locking member may comprise one, two or a plurality of protruding portions protruding inwardly on the inner surface of the outer casing. The locking member in the form of a recess may for example be comprised of a recess that is provided in the inner surface of the outer casing. Hence, the locking member may be formed by forming a recess which extends into the inner surface of the outer casing. Also, the locking member may comprise one, two, or a plurality of, recesses arranged on the inner surface of the tubular outer casing. The locking member may also advantageously be formed of a combination of protruding portions and recesses extending in the main direction of the pipe arrangement and arranged inside the outer casing.

According to an exemplifying embodiment, the support member comprises support portions extending from at least one of the first and second pipes to the outer casing, wherein peripheral ends of the support portions abut the inner surface of the outer casing. The support portions and the peripheral ends of the support portions of the support member thereby provide suitable support in relation to the outer casing such that the first and second pipes may be supported in a desired position, for example in a symmetric center position in relation to the tubular outer casing. In more detail, the peripheral ends of the support portions of the support member abut, or is in supporting contact with, the inner surface of the outer casing such that the support member, via the support portions, may secure the first and second pipes in a desired position. Furthermore, the peripheral ends may advantageously be provided with abutting surfaces facing in a radially outward direction and adapted to form contacts points, or contact surfaces, between the support member and the inner surface of the outer casing. The peripheral ends may further be adapted to move, or slide, in relation to the inner surface of the outer casing, also while being in contact with the inner surface of the outer casing.

According to an exemplifying embodiment, the peripheral end of at least one of the support portions of the support member is adapted to cooperate with the locking member of the outer casing to prevent the rotational movement. Hence, the locking member control the rotational movement around an axis of rotation coinciding with, or parallel with, the main direction, wherein the locking member forms a stopping device which hinders the peripheral end of the support portion of the support member to move in a direction which would result in a rotational movement of the support member. The peripheral end may further be adapted to engage with the locking member to prevent rotation. For example, the peripheral end may form a slider device, or runner device, which is arranged to, or linked to, the locking member.

According to an exemplifying embodiment, the peripheral ends of the support member may further be tapered for facilitating insertion of the support member into the outer casing.

According to an exemplifying embodiment, the locking member comprises a track extending in the main direction.

According to an exemplifying embodiment, the track is suitably formed by one, two, or a plurality of, from an inner surface of said outer casing, inwardly projecting portions, which track is further adapted to secure the peripheral end of the support portion against the rotational movement. The track may alternatively be formed of recesses on the inner side of the outer casing, in more detail, on the inner surface of the outer casing.

Furthermore, the track may have a suitable shape for forming a track which is adapted to guide the support members, wherein the track extends in the main directions and cooperates with the support members. Moreover, the support members may be provided with corresponding shapes for cooperating, integrating, and/or engaging with the track.

According to an exemplifying embodiment, the pipe comprises a plurality of support members subsequently arranged along the main direction, the support members being adapted to support the first and second pipes in relation to the outer casing. This advantageously allows for a pipe arrangement, wherein the first and second pipes may be maintained in the correct aligned and parallel orientation with respect to the outer casing, along the full length of the pipe arrangement. In particular, pipe sections according the present invention may be realized, wherein a number of support members support the first and second pipe along the main direction of the pipe section. Hence, one pipe section may be further divided into two pipe sections, wherein, at the point of separation, the correct orientation of the first and second pipes is ensured by the subsequently arranged support members. Hence, a pipe section may be divided and pieces of the pipe sections of arbitrary length may be joined together to form pipelines.

According to an exemplifying embodiment, a pipeline system for distribution of heating/cooling medium in a district heating/cooling system is provided, wherein the system comprises a plurality of interconnected pipe sections, wherein each pipe section is arranged according to the pipe arrangement according to the present invention.

According to a second aspect thereof, the present invention relates to the use of a pipe arrangement according to the present invention for distribution of medium in an industrial application or in a heating/cooling medium distribution system for district heating/cooling systems. The pipe arrangement is also advantageous to use in the process of manufacturing pipelines for use in a distribution system, wherein joining of pipe section parts is considerably facilitated due do continuous alignment of the medium pipes of each pipe line section. Moreover, the use of pipe arrangement of the present invention allow for a durable pipelines which have improved age resistance and improved properties to withstand dynamic thermal and pressure conditions.

According to a third aspect thereof, the present invention relates to a method for manufacturing a pipe arrangement having a first and second pipe inside an outer casing for distribution of heating/cooling medium in a district heating/cooling system, wherein the method comprises providing a locking member on an inner side of an outer casing, providing support members onto a first and second pipe for supporting the first and second pipes in relation to the outer casing, sliding the support members, which hold the medium pipes, into position inside the outer casing, and securing the support members with the locking member, thereby securing the support member and the first and second pipes against rotational movement in relation to the outer casing, around an axis of rotation coinciding with, or parallel with, the main direction.

In other words, the first and second pipes for conveying medium, or the medium pipes, are secured in an aligned and parallel orientation with respect to the outer casing during manufacturing. Hence, twisting or bending of the first and second pipes is efficiently minimized and straight pipe arrangement may be realized. In particular smaller distortions or irregularities related to the medium pipes parallel alignment with respect to each other and the outer casing is prevented during manufacturing. Furthermore, the support members allow for that the correct orientation of the first and second medium pipes is maintained along the full length of the pipe arrangement along its main direction. The method is further advantageous in that a pipe arrangement with the above described benefits is provided and that manufacturing of improved pipe arrangements is considerably facilitated.

According to an exemplifying embodiment, the method further comprises providing a thermally insulating material inside the outer casing, which insulating material surrounds the first and second pipes. Hence, during manufacturing, the pipe arrangement is provided with suitable insulating and durable properties with respect to thermal transport. The insulating material may advantageously be provided by injecting and expanding an expanding and solidifying foam, or similar material. Hence, the support member ensures the correct orientation of the first and second medium pipes during the manufacturing process, wherein the insulating material may provide further support to the first and second medium pipes in the finished product.

According to an exemplifying embodiment, the step of providing a locking member comprises providing the outer casing with a protruding portion, or a recess, extending in the main direction on an inner surface of the outer casing. This further facilitates the manufacturing process, wherein the locking member is formed directly on, or in, the outer casing. Hence, a continuous manufacturing process is provided with few manufacturing steps which enable efficient manufacturing.

According to an exemplifying embodiment, the method further comprises, before sliding said first and second pipes and said support members into position, aligning said support members with said locking member, wherein said support members are guided by the locking member when said first and second pipes and said support members are slid into the outer casing. In other words, the first and second pipes are guided into the outer casing while being supported in an aligned and non-rotated orientation by the support members which, in turn, are guided on the inside of the outer casing by the locking member.

Other objectives, features and advantages of the present invention will appear from the following detailed disclosure, from the attached dependent claims as well as from the drawings.

### Brief Description of Drawings

For exemplifying purposes, the invention will be described in closer detail in the following with reference to exemplifying embodiments thereof illustrated in the attached drawings, wherein:
Fig.1 is a schematic perspective view of an embodiment of the pipe arrangement according to the present invention,
Fig. 2a is a schematic side view of an embodiment of the pipe arrangement according to the present invention.
Fig 2b is a schematic top view of an embodiment of the pipe arrangement according to the present invention.
Fig 3a-b illustrate steps of an embodiment of a method for manufacturing a pipe arrangement according to the present invention.
Fig. 4 illustrates further steps of an embodiment of a method for manufacturing a pipe arrangement according to the present invention.
Fig. 5a-f are cross-sectional views of embodiments of the pipe arrangement according to the present invention.

### Detailed Description of Embodiments of the Invention

In the following detailed description exemplifying embodiments of the invention will be described.

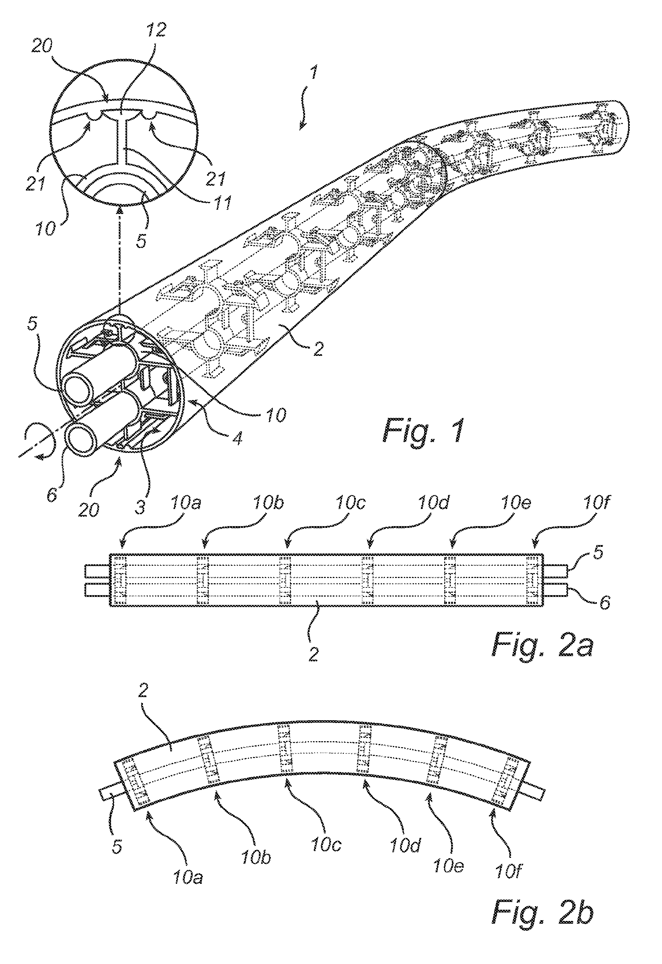

In Fig. 1 a pipe arrangement 1 according to an embodiment of the present invention is shown. The pipe arrangement 1 comprises a tubular and waterproof outer casing, or jacket pipe, 2, which in this embodiment is a jacket pipe with a rounded, or circular, cross-sectional profile. The outer casing 2 is not, however, limited to rounded or circular cross-sectional profile, alternative profiles, such as oblique shapes or rounded and cornered shapes, are also possible within the scope of the invention. The outer casing 2 extends in a main direction and forms an initially hollow body and has an inner surface, or inner side, 3, and an outer side, or outer surface, 4, wherein the outer surface 4 may be a smooth, uniform, and/or even surface. A first and second pipe, or medium pipes, 5 and 6 for conveying medium are arranged inside the outer casing 2. The medium pipes 5 and 6 also extend in the main direction and is arranged in a parallel configuration to each other and in symmetric and center position in the outer casing 2.

The pipe arrangement 1 further comprises support members 10 which are arranged inside the outer casing 2 and which are adapted to the support the medium pipes 5 and 6 in relation to the outer casing 2. In more detail, a number of support members 10 are arranged in a following, or subsequent, manner along the main direction of the pipe arrangement 1, which thereby provide continuous support to the first and second medium pipes 5 and 6. The support members 10 engage, or hold, the first and second medium pipes 5 and 6 in the desired center and symmetric configuration in relation to the outer casing 2. The outer casing 2 further comprises locking members 20 which are arranged on the inner side 3 of the outer casing 2. The locking members 20 are formed of protruding portions 21 on the inner side 3 of the outer casing 2, which protruding portions extend longitudinally along the main direction of the pipe arrangement 1. In more detail, the protruding portions 21 protrude inwardly in a direction towards a longitudinal center axis of the outer casing and may be formed during extrusion manufacturing of the outer casing 2. In other words, the protruding portions 21 may advantageously be formed in the same material as the outer casing 2, wherein e.g. an extrusion process enables efficient manufacturing of durable protruding portions 21 which extend linearly in the main direction of the outer casing 2.

As further illustrated, the support members 10 cooperate with the locking members 20 to prevent a rotational movement of the support member 10 in relation to the outer casing 2 around an axis of rotation, which is schematically illustrates, and which coincides with, or which is parallel to, the main direction. In other words, the support members 10 and the locking members 20 interact and facilitate a rotational locking mechanism between the support member 10 and the outer casing 2.

As further illustrated in Fig. 1, the pipe arrangement 1 comprises a straight portion and a bent, or curved, portion. Also, the pipe arrangement 1 may be comprised of a straight pipe arrangement section and a curved pipe arrangement section, which, as exemplified for illustrative purposes, are schematically joined together.

The support member 10 further comprises support portions 11 which extend from the first and second medium pipes 5 and 6 to the outer casing 2. The support portion 11 thereby maintains the first and second medium pipes 5 and 6 in the center position within the outer casing 2. The support portions 11 further have peripheral ends 12 which abut the inner surface 3 of the outer casing 2. In other words, the support member 10 form spacers members which ensures that the first and second medium pipes 5 and 6 are uniformly and symmetrically distanced from the inner surface 3 of the outer casing 2. However, the first and second medium pipes 5 and 6 are not limited to be arranged in a center and symmetric configuration; they may also be arranged off-centered in relation to each other and the outer casing 2. The support member may also be arranged to support an arbitrary number of parallel medium pipes arranged inside the outer casing.

In more detail, peripheral ends 12 of the support member cooperate with the locking member 20. As illustrated, the locking member 20 comprises protruding portions 21 which define a track which prevents the peripheral end 12 of the support portion 10 to move in a direction which would result in a rotational movement of the support member 10 along the axis of rotation.

Furthermore, the support member is enabled to move in the main direction, while simultaneously cooperating with the locking member 10 and supporting the first and second medium pipes 5 and 6 in the aligned orientation. In particular, the movement along the main direction of the support member 10 is facilitated by a track, defined by the protruding portions 21, which guides the cooperating peripheral end of the support member 10 during longitudinal movements along in the pipe arrangement 1.

The medium pipes 5 and 6 may e.g. be formed of a weldable material, such as steel, and the outer casing 2 may be formed of plastics material which further may be stabilized for thermal, chemical, or oxidized degradation or breakdown. A suitable material for the outer casing 2 is high-molecular ethylene plastics, or similar plastics.

The pipe arrangement may also comprise a thermally insulating material which is not shown in Fig. 1. Suitable insulating material may be expanded urethane plastics which may fully fill up the internal cavity of the outer casing 2 such that the medium pipes 5 and 6 as well as the support members 10 are fully surrounded with insulating material.

In Fig. 2a and Fig. 2b, two embodiments of the present invention are shown, each arranged as described with reference to Fig. 1, if not stated otherwise. Each of the two embodiments represents a prefabricated pipe section which may be interconnected with a plurality of similar pipe sections into a pipeline for use in e.g. urban district heating/cooling system.

In Fig. 2a, a side view of a double pipe section is shown, i.e. a pipe arrangement having two medium pipes, in this case a first and second medium pipe 5 and 6. The double pipe section has two free ends, where the first and second medium pipes 5 and 6 protrude a short distance outside the respective ends of the outer casing 2. The first and second pipe 5 and 6 extend through the outer casing 2 in a parallel configuration, wherein support members 10a-10f are positioned along the main direction of the double pipe section, inside the outer casing 2. Each one of the support members 10a-10f cooperates with a locking member arranged on an inner side of the outer casing 2. Hence, rotational movement of the support members 10a-10f around the axis of rotation coinciding with, or parallel to, the main direction of the double pipe section is prevented. In more detail, the support members 10a-10f ensure correct alignment of the first and second medium pipes 5 and 6 throughout the entire double pipe sections. Hence, the double pipe section may advantageously be divided for purposes of joining together smaller pieces of pipe sections when manufacturing a pipeline. For example, the double pipe section may advantageously be divided anywhere between any two neighboring support members of the support members 10a-10f. Furthermore, the double pipe section is typically also provided with a thermally insulating material inside the outer casing 2, which thermally insulating material may entirely surrounds the medium pipes 5 and 6 inside the outer casing 2.

For example, when forming a pipeline of double pipe sections, two double pipe sections may be joined, or interconnected, to each other. In more detail, the double pipe sections may be longitudinally aligned wherein the first and second pipes 5 and 6 of each double pipe section are provided in a vertical configuration with the respective openings in a facing relationship. The first and second pipes 5 and 6 of one of the double pipe sections may thereafter be welded to the other double pipe section's first and second pipes 5 and 6, such that a continuous and closed double pipeline is formed. Furthermore, the joint area between the double pipe sections comprising the welded joint may further be protected with an additional protective outer casing or sleeve, such as a shrink sleeve, and further insulated with a foam or other suitable material, for example via injection. Hence, the joint between the double pipe sections of a pipeline is suitably sealed and protected.

In Fig. 2b, a top view of a curved double pipe section, is illustrated. In this embodiment, the support members 10a-10f follow the curve of the outer casing 2, and cooperate with the locking member which extends on the inside along the curved outer casing 2. The first and second pipes 5 and 6 are further arranged vertically at installation, wherein only the top one of the first and second medium pipes 5 and 6 is shown in Fig. 2b.

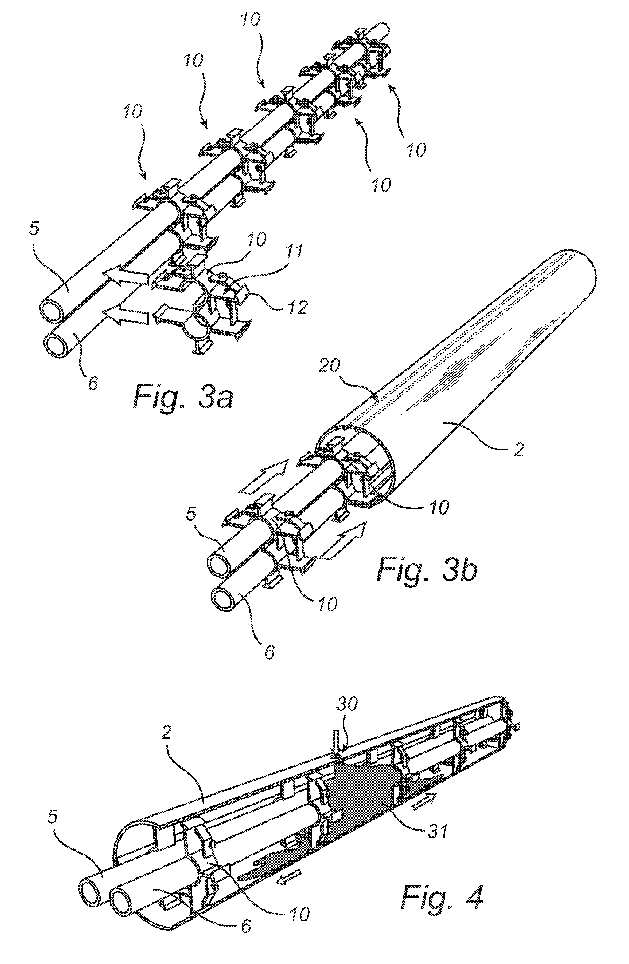

Fig. 3a and 3b illustrate steps of an embodiment of a method for manufacturing a pipe arrangement according to the present invention. In more detail, an embodiment of a method for manufacturing a pipe arrangement for distribution of heating/cooling medium in a district heating/cooling system, wherein the pipe arrangement comprises a first and second pipe, or medium pipes, for conveying heating/cooling medium. The method comprises providing a first and second medium pipe 5 and 6 and aligning them in a parallel configuration. The first and second pipe 5 and 6 are further provided with support members 10a-10f which are attached onto the pipes. The support members 10a-10f fixate the medium pipes 5 and 6 in a correct mutual relationship. The first and second medium pipes 5 and 6 together with the support member 10a-10f form a subunit of the pipe arrangement. The support members may be formed of a flexible material and attached to the medium pipes 5 and 6 by snapping action. Alternatively, the support members 10a-10f are secured to the medium pipes 5 and 6 with a securing member, for example via a close fit and/or frictional forces between the medium pipes 5 and 6 and a gripping portion of the support member 10, which gripping portion is adapted to grip and secure the first and second medium pipes 5 and 6.

The method further comprises providing the subunit in an outer casing, or jacket pipe, 2. The outer casing 2 may be formed in an extrusion process, or similar, and is provided with a locking member 20 which extends straight on the inner side along the full length of the outer casing 2. As illustrated, the subunit is inserted, or slid, into the outer casing 2, wherein the support portions 10a-10f are arranged to cooperate with the locking member 20 such that the support members 10a-10f and the first and second medium pipes 5 and 6 are secured against rotational movement. In more detail, the support members 10a-10f of the subunit are aligned with the locking member 20 of the outer casing 2. Furthermore, the subunit is provided into the outer casing 2 by sliding it into the outer casing 2. During sliding, peripheral ends of the support member 10a-10f are linked to and guided along tracks formed by the locking member 20 on the inner side of the outer casing 2. Furthermore, remaining peripheral ends of the support members 10a-10f, which are not directly connected to, or guided by, the locking member 20, are abutting and are sliding against the inner surface of the outer casing 2 during the insertion of the subunit.

When the subunit, i.e. the first and second medium pipes 5 and 6 as well as the support members 10a-10f, is arranged in the correct position inside the outer casing 2, the method may further comprise providing a thermally insulating material in the cavity inside said outer casing 2, which insulating material is arrange to surround the medium pipes 5 and 6 and the support member 10a-10f. The insulating material may be providing by injection foam, expanding the foam, and solidifying the foam, such that the complete cavity inside the outer casing 2 is insulated.

As illustrated in Fig. 4, the expanding foam 31 may be provided into the outer casing via an aperture, or hole, 30, centrically arranged along the longitudinal direction of the outer casing, wherein the expanding foam 13 is forced into the outer casing 2 under high pressure, for example by utilizing a propellant gas. As further illustrated, the insulating expanding foam 31 moves towards the free ends of the pipe arrangement in order to fill the complete pipe arrangement, wherein the occurrence of air voids or cavities is mitigated. Thermally insulating material, however, may also be providing before, or simultaneously to, inserting the medium pipes 5 and 6 and the support members 10a-10f into the outer casing 2. Furthermore, the insulating material, in the form of an expanding foam, may also be provided into the pipe arrangement from one, or both, of its free ends, or from a plurality of injection points, or holes, along the outer casing 2. Also, the pipe arrangement, may further be manufactured in a continuous process, or non-interrupted process.

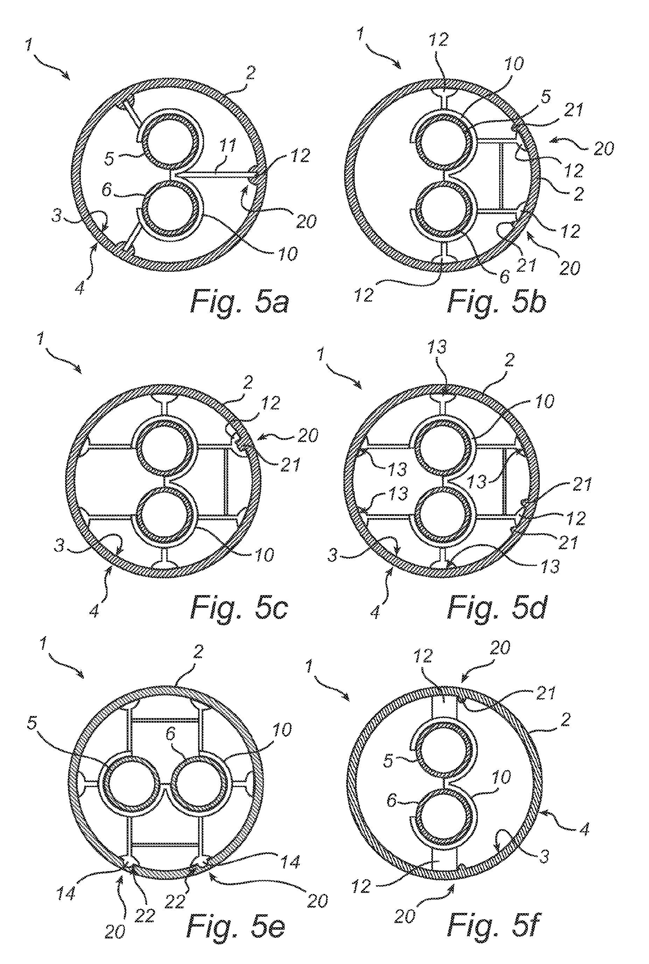

In Fig. 5a-5f, cross-sectional views of embodiments of the pipe arrangement 1 according to the present invention are illustrated. In more detail, alternative configurations and solutions of support members 10 which cooperate with alternative configurations and solutions of the locking member 20, are shown. The pipe arrangement 1 comprises an outer casing 2 having an inner 3 and outer 4 side, a first and second medium pipe 5 and 6, a support member 10 having support portions 11 and peripheral ends 12, and locking members 20 arranged on the inside of the outer casing 2.

In particular, in Fig. 5a, the support member 10 supports the medium pipes and comprises three supporting portions 11 which extend in a direction from at least one of the medium pipes 5 and 6 towards the surrounding outer casing 2. Each support portion 11 further comprises peripheral ends 12 arranged in abutting configuration with the inner side 3 of the outer casing 2. In more detail, the inner side 3 of the outer casing 2 has one locking member 20 for each respective peripheral end 12 of the support members 10. The locking members 20 are formed of protruding portions each comprising a groove, or slit, wherein the respective peripheral ends 11 are arranged in respective grooves, or slits.

In Fig. 5b, the locking member 20 is formed of two protruding portions 21 which are arranged a distance apart. Furthermore, the support member 10 comprises four peripheral ends 12, wherein two peripheral ends are arranged between the projecting portions 21, such that the support member 10 is prevented from rotational movement.

In Fig. 5c, the locking member 20 comprises a square shaped protruding portion 21, extending inwardly from the inner side 3 of the outer casing 2. One peripheral end 12 of the support member 10 further comprises a corresponding shape which is adapted for a close fit with the protruding portion 21. In other words the protruding portion 21 of the locking member 20 is received in the peripheral end 12 of the support member 10. However, the protruding portion 21 is not limited to having a square shape; other suitable shapes are also possible.

Fig. 5d illustrates an embodiment wherein a peripheral end 12 of the support member 10 is secured by two protruding portions 21. The support member further comprises five additional peripheral ends, each with a corresponding contact surface 13 which is arranged adjacent the inner side 3 of the outer casing 2 for supporting purposes.

In Fig. 5e, the locking member 20 comprises two recesses 22 arranged in the inner side 3 of the outer casing 6. The support member 10 is further adapted with peripheral ends 12 having corresponding projecting portions 14 which are received in the respective recess 22.

In Fig. 5f, an alternative embodiment of locking members 20 in cooperation with the support member 10, is illustrated. The locking members 20 comprises protruding portions 21, each arranged to restrict the movement of a respective peripheral end 12 of the support member 10. Hence, the support member 10 is prevented from both clockwise and anti-clockwise rotational movements.

The invention has mainly been described above with reference to a few embodiments. However, as is readily appreciated by a person skilled in the art, other embodiments than the ones disclosed above are equally possible within the scope of the invention, as defined by the appended patent claims.

For instance, for an outer casing having a polygonal cross-section, the locking member may be one or more of sides of said polygonal shape cooperating with correspondingly shaped peripheral ends of a support member.

Furthermore, the features described in association with different embodiments and aspects of the invention may be combined with the claimed scope in order to enable further embodiments.

## Claims

1. A pipe arrangement (1) for distribution of heating/cooling medium in a district heating/cooling system, said pipe arrangement comprising:
a tubular waterproof outer casing (2),
a first and a second pipe (5, 6) adapted to convey heating/cooling medium, wherein said first and second pipes (5, 6) are parallel and extend in a main direction, and are arranged inside said outer casing (2), and
at least one support member (10) arranged inside said outer casing (2) and adapted to support said first and second pipes (5, 6) in relation to said outer casing (2),
wherein said outer casing (2) comprises a locking member (20), which locking member is arranged on an inner side of said outer casing (2), and
wherein said support member (10) cooperates with said locking member (20) to prevent a rotational movement of said support member (10) in relation to said outer casing (2) around an axis of rotation coinciding with, or parallel with, said main direction.

2. A pipe arrangement (1) according to claim 1, further comprising a thermally insulating material (31) arranged inside said outer casing (2), which insulating material surrounds said first and second pipes (5, 6).

3. A pipe arrangement (1) according any one of the preceding claims, wherein said support member (10) is enabled to move in relation to said outer casing (2) along a direction coinciding with, or parallel with, said main direction.

4. A pipe arrangement (1) according any one of the preceding claims, wherein said locking member (20) is integrally formed in the outer casing (2).

5. A pipe arrangement (1) according any one of the preceding claims, wherein said locking member (20) of said outer casing (2) is formed of a protruding portion or a recess extending in said main direction.

6. A pipe arrangement (1) according any one of the preceding claims, wherein said support member (10) comprises support portions (11) extending from at least one of said first and second pipes (5, 6) to said outer casing (2), wherein peripheral ends (12) of said support portions abut the inner surface of said outer casing (2).

7. A pipe arrangement (1) according to claim 6,
wherein said peripheral (12) end of at least one of said support portions (11) of said support member (10) is adapted to cooperate with said locking member (20) of said outer casing to prevent said rotational movement.

8. A pipe arrangement (1) according to claim 7,
wherein said locking member (20) comprises a track extending in said main direction, which track is suitably formed by at least two, from an inner surface of said outer casing, inwardly projecting portions (21), and
wherein said track is adapted to secure said peripheral end (12) of said support portion (10) against said rotational movement.

9. A pipe arrangement (1) according any one of the preceding claims, comprising a plurality of support members (10a-f) subsequently arranged along said main direction, said plurality of support members (10a-f) being adapted to support said first and second pipes (5, 6) in relation to the outer casing.

10. A pipeline system for distribution of heating/cooling medium in a district heating/cooling system, said system comprises a plurality of interconnected pipe sections, wherein each pipe section is arranged according to the pipe arrangement (1) according to any one of claims 1-9.

11. Use of a pipe arrangement (1) according to any one of claims 1-9 for distribution of medium in an industrial application or in a heating/cooling medium distribution system for district heating/cooling systems.

12. A method for manufacturing a pipe arrangement having a first and second pipe inside an outer casing for distribution of heating/cooling medium in a district heating/cooling system, said method comprising:
providing a locking member (20) on an inner side of an outer casing (2),
providing support members (10) onto a first and second pipe (5, 6) for supporting said first and second pipes in relation to said outer casing,
sliding said support members (10), which holds the first and second pipes (5, 6), into position inside said outer casing (2), and
securing said support members (10) with said locking member (20), thereby securing said support member and said first and second pipes against rotational movement in relation to said outer casing (2), around an axis of rotation coinciding with, or parallel with, a main direction.

13. A method for manufacturing a pipe arrangement according to claim 12, said method further comprising:
providing a thermally insulating material (31) inside said outer casing (2), which thermally insulating material surrounds said first and second pipes (5, 6).

14. A method for manufacturing a pipe arrangement according to any one of claims 12-13, in which method said step of providing a locking member (20) comprises providing said outer casing with a protruding portion, or a recess, extending in the main direction on an inner surface of said outer casing (2).

15. A method for a pipe arrangement according to any one of claims 12-14, further comprising, before sliding said first and second pipes (5, 6) and said support members (10) into position, aligning said support members (10) with said locking member (20), wherein said support members are guided by the locking member when said first and second pipes and said support members are slid into the outer casing (2).
